Europäisches Patentamt

European Patent Office

Office européen des brevets

(11) Veröffentlichungsnummer: **0 193 705
B1**

(12) **EUROPÄISCHE PATENTSCHRIFT**

(45) Veröffentlichungstag der Patentschrift: **28.11.90**

(51) Int. Cl.⁵: **B 60 Q 1/04**

(21) Anmeldenummer: **86100332.5**

(22) Anmeldetag: **13.01.86**

(54) Scheinwerfer.

(30) Priorität: **06.03.85 DE 3507928**

(43) Veröffentlichungstag der Anmeldung:
**10.09.86 Patentblatt 86/37**

(45) Bekanntmachung des Hinweises auf die
Patenterteilung:
**28.11.90 Patentblatt 90/48**

(84) Benannte Vertragsstaaten:
**DE FR GB IT**

(56) Entgegenhaltungen:
**FR-A-1 566 551
FR-A-2 063 817
GB-A-1 159 639
US-A-2 084 120**

(73) Patentinhaber: **Dr.Ing.h.c. F. Porsche
Aktiengesellschaft
Porschestrasse 42
D-7000 Stuttgart 40 (DE)**

(72) Erfinder: **Heiler, Roland
Kirchnerstrasse 1
D-7250 Leonberg (DE)**

Courier Press, Leamington Spa, England.

**Beschreibung**

Die Erfindung bezieht sich auf einen Scheinwerfer nach dem Oberbegriff des Anspruchs 1.

Aus der GB-A 11 59 639 ist ein Scheinwerfer für ein Kraftfahrzeug bekannt, der in einem Gehäuse angeordnet ist und um eine in Fahrzeuglängsrichtung verlaufende Drehachse in eine Gebrauchs- und eine Nichtgebrauchsposition verstellbar ist. In der Nichtgebrauchsposition ist der Scheinwerfer im Fahrzeugaufbau versenkt angeordnet und das Gehäuse schließt mit seiner Außenfläche die Karosserieöffnung bündig ab, wozu diese in besonderer Weise entsprechend dem übrigen Fahrzeug eine Lackierung aufweist.

Aufgabe der Erfindung ist es, einen Scheinwerfer für Kraftfahrzeuge, insbesondere für Sportwagen, zu schaffen, der in einfacher baulicher Ausführung um eine Drehachse in eine aufrechte Gebrauchsposition und in eine versenkte Nichtgebrauchsposition verdrehbar ist, wobei ein bündiger Abschluß der Scheinwerferöffnung im Fahrzeugaufbau ohne zusätzlichen Aufwand gewährleistet ist.

Diese Aufgabe wird erfindungsgemäß durch die kennzeichnenden Merkmale des Anspruchs 1 gelöst. Weitere vorteilhafte Ausbildungen der Erfindung beinhalten die Unteransprüche.

Die mit der Erfindung hauptsächlich erzielten Vorteile bestehen darin, daß durch eine besondere Anstellung der einzigen Drehachse zur außenliegenden Streuscheibe bzw. zum Deckglas des Scheinwerfers eine solche Bewegung des Gehäuses bzw. des Scheinwerfers erzielt wird, daß in der Nichtgebrauchsposition die Streuscheibe bzw. das Deckglas gleichzeitig als bündige Abschlußkappe für die Öffnung in der Karosserie dient, wobei die Streuscheibe selbst von außen sichtbar ist. Durch diese sichtbare Anordnung besteht auch die Möglichkeit eines einfachen Vorsehens eines weiteren, als Lichtquelle verwendbaren Zusatzscheinwerfers. Dieser ist entweder in das Gehäuse integriert oder ortsfest hinter dem Gehäuse angeordnet.

Durch einen Drehantrieb des Gehäuses über einen E-Motor wird kein Bewegungsgestänge bekannter Art, welches sehr platzaufwendig ist und aus mehreren beweglichen Teilen besteht, benötigt.

Der aufbauseitig abgestützte Motor beinhaltet gleichzeitig den einzigen Lagerort für die Achse, so daß platzeinnehmende zusätzliche Lagerorte entfallen können.

Der Drehmotor ist vorzugsweise als E-Motor ausgeführt, wobei für jeden Scheinwerfer ein Motor vorgesehen ist. Die Motoren sind über eine Steuerschaltung in der Weise miteinander verbunden und ansteuerbar, daß nur eine synchrone Bewegung beider Scheinwerfer möglich ist. In ihren Endstellungen liegen die Scheinwerfer z.B. an einem Anschlag an, der mit einer Halteeinrichtung versehen ist, damit eine konstante Lage auch bei Erschütterungen gewährleistet wird.

Der besondere Bewegungsablauf des Scheinwerfers bzw. des Gehäuses nach Art einer Taumelbewegung bietet die Möglichkeit, mit wenigen Mitteln, insbesondere nur durch eine besondere Anstellung der gerade verlaufenden, einstückig ausgebildeten Drehachse gemäß Anspruch 2, bei jedem beliebigen Formverlauf der Haube die optimalen Positionen nach der Erfindung zu erzielen.

Es hat sich außerdem noch gezeigt, daß die Taumelbewegung des Scheinwerfers begünstigt, daß eine sich über die Scheinwerfer gebildete Eisschicht infolge der sich verlagernden Streuscheibe beim Verdrehen leicht aufbrechbar ist.

Ein Ausführungsbeispiel der Erfindung ist in der Zeichnung dargestellt und wird im folgenden näher beschrieben.

Es zeigt

Fig. 1 eine schematische Darstellung der Lage der Drehachsen zur Streuscheibe in Gebrauchs- und Nichtgebrauchsposition,

Fig. 2 die eingefahrene Nichtgebrauchsposition der Scheinwerfer mit als Lichthupe verwendeten weiteren Zusatzscheinwerfern im Gehäuse,

Fig. 3 die ausgefahrene Gebrauchsposition der Scheinwerfer,

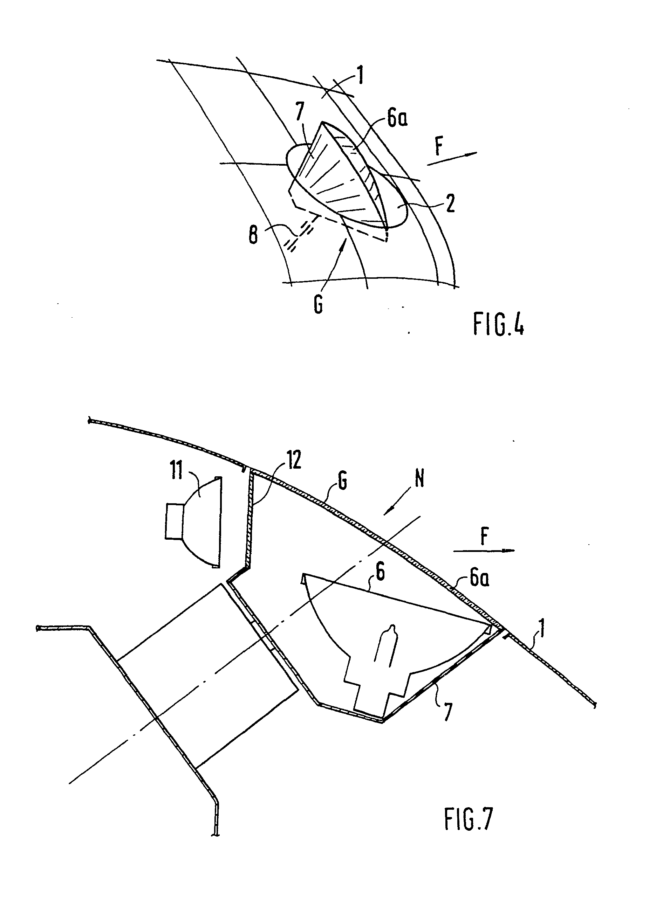

Fig. 4 eine schaubildliche Darstellung der Gebrauchsposition der Scheinwerfer,

Fig. 5 eine schaubildliche Darstellung der Nichtgebrauchsposition der Scheinwerfer im Kraftfahrzeug mit ihren zugehörigen Drehachsen,

Fig. 6 eine schaubildliche Darstellung der Gebrauchsposition der Scheinwerfer im Kraftfahrzeug mit den zugehörigen Drehachsen, und

Fig. 7 eine weiteres Ausführungsbeispiel eines verdrehbaren Scheinwerfers mit ortsfest hinter dem Gehäuse angeordnetem Zusatzscheinwerfer.

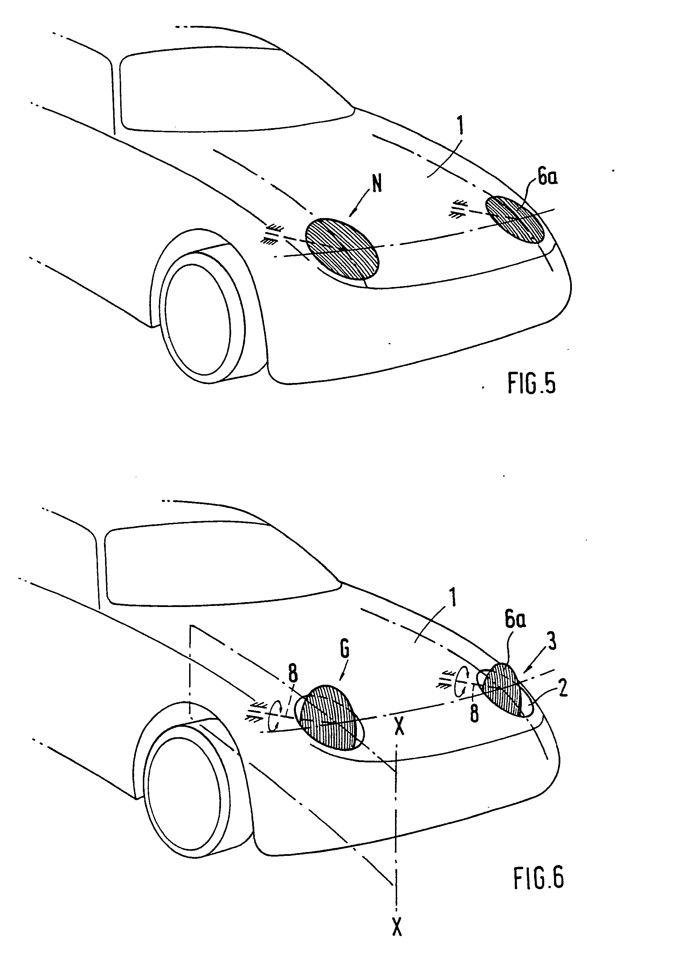

In einem Kraftfahrzeug 1 sind frontseitig in der Karosserie Offnungen 2 für vordere Scheinwerfer 3 vorgesehen. Diese Scheinwerfer 3 sind mit ihren optisch wirksamen Teilen wie Lichtquelle 4, Reflektor 5 und gegebenenfalls einer innenliegenden Streuscheibe 6 in einem Gehäuse 7 angeordnet, das von einer außenliegenden Streuscheibe 6a oder einem Deckglas abgeschlossen ist. Der Reflektor 5 kann von einer Streuscheibe abgeschlossen sein, so daß dann das Gehäuse 7 nur von einem Deckglas verschlossen ist. Wenn der Reflektor 5 keine Streuscheibe 6 aufweist, ist das Gehäuse 7 von einer Streuscheibe abgedeckt. Das Gehäuse 7 bzw. der Scheinwerfer 3 ist um eine Achse 8 in eine ausgefahrene Gebrauchsposition G und in eine eingefahrene Nichtgebrauchsposition N verdrehbar. Die Achse 8 erstreckt sich etwa in einer senkrechten Fahrzeuglängsebene X—X und schwenkt in Querrichtung zum Fahrzeug, wie die Pfeile in den Fig. 5 und 6 näher zeigen. Der Verschwenkwinkel von einer Position in die andere Position beträgt etwa 180°, so daß z.B. bei 0° die Endstellung der Nichtgebrauchsposition N und nach einer Drehung um 180° un die Achse 8 die Endstellung der Gebrauchsposition G eingestellt wird.

In der Gebrauchsposition G ist das Gehäuse 7 in der Weise aufgestellt, daß die Lichtquelle 4 wirksam ist. Dagegen ist das Gehäuse 7 in der Nichtgebrauchsposition N so in die Karosserie eingefahren, daß die Streuscheibe 6a bzw. das Deckglas bündig mit der Karosserieoberfläche des Fahrzeugs 1 verläuft.

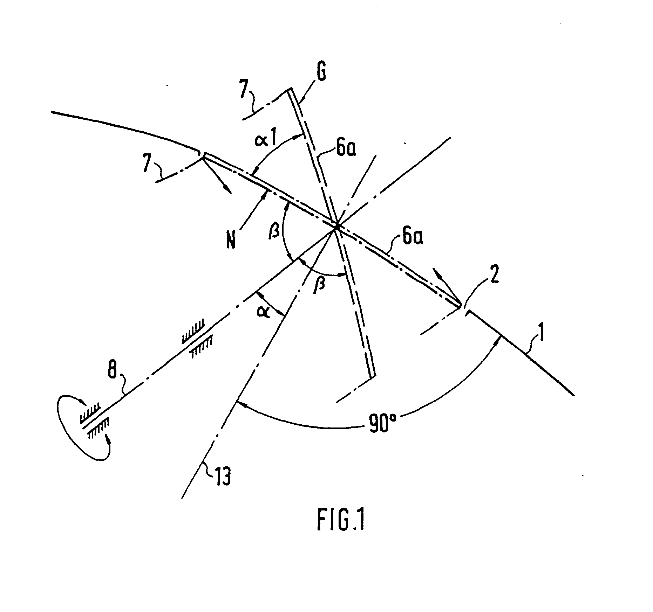

Die Achse 8 ist zur Streuscheibe 6a bzw. zum Deckglas unter einem spitzen Winkel ß angestellt. Der Scheinwerfer 3 bzw. die Streuscheibe 6a führt, wie Fig. 1 zeigt, z.B. von der Position N in die Position G eine sogenannte Taumelbewegung durch, die ein Einfahren und Ausfahren bewirkt.

Insbesondere ist die Drehachse 8 in einer senkrechten Längsebene X—X unter einem Winkel α zu einer zur Streuscheibe 6a bzw. zum Deckglas rechtwinkelig verlaufenden ideellen Achse 13 geneigt angeordnet. Dieser Winkel α ist die Winkelhalbierende vom Winkel α1 zwischen der Streuscheibe 6a in der Gebrauchsposition G und in der Nichtgebrauchsposition N. Die Streuscheibe 6a sowie die Öffnung 2 sind rotationssymmetrisch ausgeführt, wobei die unter einem Winkel ß angestellte Drehachse 8 die Streuscheibe 6a zentrisch durchdringt.

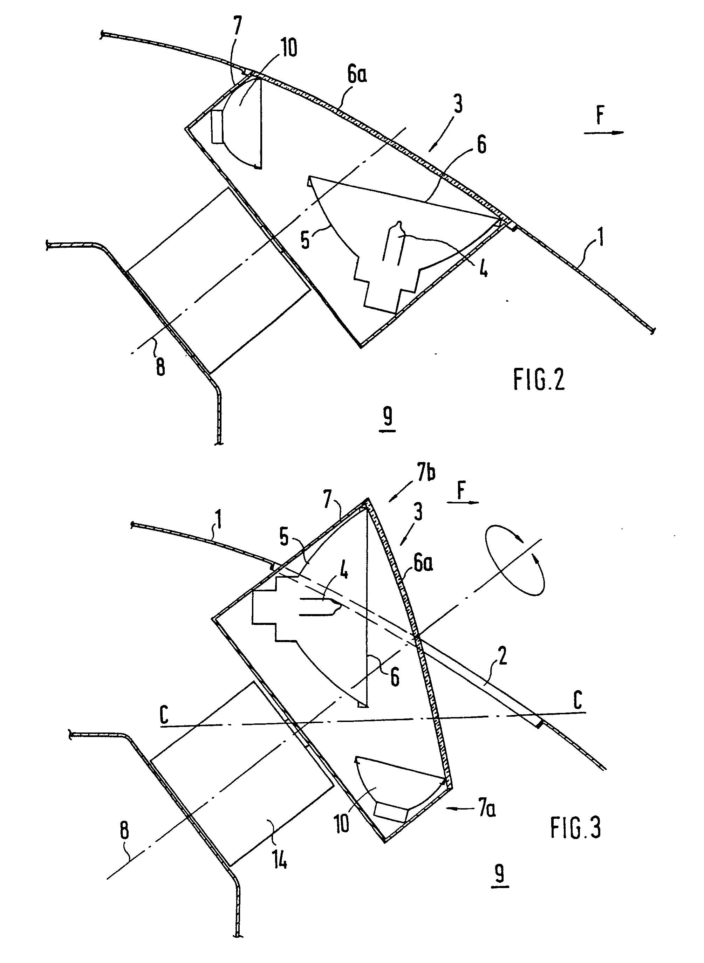

Im gezeigten Ausführungsbeispiel gemäß der Fig. 2 und 3 sowie der weiteren Fig. 5 und 6 steht der aufgerichtete Scheinwerfer in der Position G mit seinem unteren Gehäuseteil 7a innerhalb des von der Haube abgedeckten Innenraumes 9. Die Lichtquelle 4 ist aber so angeordnet, daß der Reflektor 5 mit seiner unteren Begrenzung etwas oberhalb einer horizontalen Ebene C—C liegt, deren Lage abhängig von der unteren Begrenzung der Öffnung 2 ist.

Das Gehäuse 7 des Scheinwerfers 3 ist so ausgeführt, daß neben dem Hauptscheinwerfer 4, 5 noch ein Zusatzscheinwerfer 10 angeordnet ist. Dieser ist, wie die Fig. 2 und 3 näher zeigen, in der Weise vorgesehen, daß bei Nichtgebrauchsposition N, wenn die Streuscheibe 6a bündig mit der Karosseriefläche verläuft, er eine Arbeitsstellung zur Abgabe von Lichtsignalen als sogenannte Lichthupe einnimmt.

Nach einer weiteren Ausführung gemäß Fig. 7 ist der Zusatzscheinwerfer 11 ortsfest in der Aufbaustruktur angeordnet. Zum Durchtritt von Lichtsignalen weist das Gehäuse 7 eine entsprechende Öffnung auf, die von einer transparenten Scheibe 12 abgedeckt ist.

Der Drehantrieb des Gehäuses 7 erfolgt vorzugsweise über einen E-Motor 14, der an der Aufbaustruktur abgestützt ist. Innerhalb des Motors 14 ist die Achse 8 zumindest einfach gelagert, wobei zum Verdrehen zwischen der Achse 8 und dem Gehäuse 7 ein eine Drehbewegung übertragendes Mittel vorgesehen ist. Dieses Mittel kann als Riementrieb, Zahnradtrieb oder einem ähnlichen Element bestehen. Zum genauen Einstellen der beiden Endstellungen G und N des Scheinwerfers können Anschläge dienen, die mit Haltevorrichtungen ausgerüstet sind, damit der Scheinwerfer 3 bei Erschütterungen seine Lage beibehält.

**Patentansprüche**

1. Scheinwerfer für Fahrzeuge (3), insbesondere für Kraftfahrzeuge, wobei der Scheinwerfer mit seinen optisch wirksamen Teilen wie Lichtquelle (4), Reflektor (5) und gegebenenfalls einer innenliegenden Streuscheibe (6) in einem Gehäuse (7) gehalten ist, das von einem Deckglas bzw. einer Streuscheibe (6a) abgeschlossen wird und eine im wesentlichen in Längsrichtung des Fahrzeugs verlaufende und zur Streuscheibe (6a) bzw. zum Deckglas eine unter einem Winkel angestellte Drehachse (8) aufweist, um die der Scheinwerfer im Fahrzeugaufbau in eine ausgefahrene Gebrauchsposition (G) und in eine eingefahrene Nichtgebrauchsposition (N) verschwenkt wird, dadurch gekennzeichnet, daß die Drehachse (8) zum Deckglas bzw. zur außenliegenden Streuscheibe (6a) unter einem — in Fahrtrichtung (F) gesehen — in den Positionen (N bzw. G) vor bzw. hinter der Drehachse (8) liegenden inneren spitzen Winkel (β) angestellt ist und in der einen Endstellung (Position N) die Oberfläche der Streuscheibe (6a) bündig zur angrenzenden Karosserieoberfläche verläuft.

2. Scheinwerfer nach Anspruch 1, dadurch gekennzeichnet, daß die Drehachse (8) in einer senkrechten Längsebene (X—X) unter einem Winkel (α) zu einer der Streuscheibe (6a) rechtwinkelig verlaufenden ideellen Achse (13) geneigt ist und dieser Winkel (α) einer Winkelhalbierenden vom Winkel (α1) zwischen der Streuscheibe in der Gebrauchsposition (G) und der Nichtgebrauchsposition (N) des Scheinwerfers (3) entspricht.

3. Scheinwerfer nach einem oder mehreren der vorhergehenden Ansprüche, dadurch gekennzeichnet, daß die Streuscheibe (6a) sowie eine Öffnung (2) in der Karosserie rotationssymmetrisch zur Drehachse (8) ausgeführt sind.

4. Scheinwerfer nach einem oder mehreren der vorhergehenden Ansprüche, dadurch gekennzeichnet, daß die Streuscheibe (6a) des Scheinwerfers (3) in der einen Endstellung (Nichtgebrauchsposition N) sichtbar ist und bündig mit der Karosserieoberfläche verläuft und in der weiteren, um 180° verdrehten Endstellung (Gebrauchsposition G) die Streuscheibe (6a) des Scheinwerfers (3) aufgerichtet ist.

5. Scheinwerfer nach Anspruch 4, dadurch gekennzeichnet, daß der aufgerichtete Scheinwerfer (3) bzw. das Gehäuse (7) mit seinem unteren Teil (7a) innerhalb der Karosserie (Raum 9) liegt und mit seinem oberen Teil (7b) frei über die Karosseriekontur hinausragt.

6. Scheinwerfer nach Anspruch 4, dadurch gekennzeichnet, daß im oberen Teil (7b) des aufgerichteten Gehäuses (7) der Reflektor (5) mit der Lichtquelle (4) angeordnet ist und der tiefste Punkt des Reflektors (5) etwa in einer gemeinsamen horizontalen Ebene (C—C) mit dem untersten Punkt der Öffnung (2) in der Karosserie liegt.

7. Scheinwerfer nach Anspruch 1, dadurch gekennzeichnet, daß in das Gehäuse (7) neben dem Hauptscheinwerfer (Lichtquelle 4, Reflektor 5) noch ein Zusatzscheinwerfer (10) integriert ist, der in eingefahrener Nichtgebrauchsposition (N) Lichtsignale abgebend angeordnet ist.

8. Scheinwerfer nach Anspruch 1, dadurch gekennzeichnet, daß das Gehäuse (7) in seiner Rückwand eine von einer transparenten Scheibe (12) abgedeckte Öffnung aufweist, hinter der ein ortsfester Zusatzscheinwerfer (11) gehalten wird, der in der eingefahrenen Nichtgebrauchsposition (N) Lichtsignale abgebend angeordnet ist.

9. Scheinwerfer nach Anspruch 1, dadurch gekennzeichnet, daß mit der Achse (8) ein Drehmotor (14) verbunden ist, der unmittelbar hinter dem Gehäuse (7) angeordnet und aufbauseitig abgestützt ist und gleichzeitig eine einfache Lagerung für dieses Gehäuse (7) aufweist.

10. Scheinwerfer nach Anspruch 9, dadurch gekennzeichnet, daß zum Verdrehen des Gehäuses (7) in seine beiden Endstellungen (G und N) zwischen der Achse (8) und dem Gehäuse (7) ein eine Drehbewegung erzeugendes Mittel, wie eine Zahnradübertragung oder einen Riementrieb, vorgesehen ist.

**Revendications**

1. Projecteur pour véhicules (3), en particulier pour véhicule automobiles, le projecteur, avec ses parties optiquement efficaces telles que la source lumineuse (4), le réflecteur (5) et, le cas échéant, une vitre de dispersion (6) placée à l'intérieur, étant maintenu dans un carter (7) qui est délimité par une vitre formant couvercle ou une vitre de dispersion (6a) et présentant un axe de rotation (8) s'étendant sensiblement en direction longitudinale du véhicule et réglé sous un certain angle par rapport à la vitre de dispersion (6a), respectivement à la vitre de couvercle, afin de faire passer par pivotement le projecteur situé dans la carrosserie du véhicule en position d'utilisation (G) et de le faire passer en position de non utilisation (N), rentrée à l'intérieur, caractérisé en ce que l'axe de rotation (8) est réglé pour faire par rapport à la vitre de couvercle ou à la vitre de dispersion extérieure (6a) un angle aigu (β), situé devant ou derrière l'axe de rotation (8) — vu en observant dans la direction de déplacement (F) — dans les positions (N ou G), et que la surface de la vitre de dispersion (6a) s'étend au ras de la surface limitrophe de la carrosserie dans une position finale (position N).

2. Projecteur selon la revendication 1, caractérisé en ce que l'axe de rotation (8) est incliné dans un plan longitudinal vertical (X—X) sous un angle (α) par rapport à un axe idéal (13) s'étendant perpendiculairement à la vitre de dispersion (6a), et que cet angle (α) correspond à une moitié de l'angle (α1), fait entre la vitre de dispersion en position d'utilisation (G) et en position de nonutilisation (N) du projecteur (3).

3. Projecteur selon une ou plusieurs des revendications précédentes, caractérisé en ce que la vitre de dispersion (6a) ainsi qu'une ouverture (2) ménagée dans la carrosserie sont réalisées symétriques en rotation par rapport à l'axe de rotation (8).

4. Projecteur selon une ou plusieurs des revendications précédentes, caractérisé en ce que la vitre de dispersion (6a) du projecteur (3) est visible lorsqu'elle est dans une position finale (position de non-utilisation N) et s'étend en affleurant à la surface de carrosserie et que, dans l'autre position finale qui est tournée de 180° (position d'utilisation G), la vitre de dispersion (6a) du projecteur (3), est dressée.

5. Projecteur selon la revendication 4, caractérisé en ce que le projecteur (3) ou le carter (7) dressé est situé avec sa partie inférieure (7a) à l'intérieur de la carrosserie (espace 9) et passe librement avec sa partie supérieure (7b) au-dessus du contour de la carrosserie.

6. Projecteur selon la revendication 4, caractérisé en ce que le réflecteur (5) avec la source lumineuse (4) est disposé dans la partie supérieure (7a) du boîtier (7) dressé, et que le point qui est le plus bas du réflecteur (5), qui est situé dans un plan horizontal commun (C—C) avec le point le plus bas de l'ouverture (2), est situé dans la carrosserie.

7. Projecteur selon la revendication 1, caractérisé en ce qu'outre la projecteur principal (source de lumière 4, réflecteur 5), il est encore disposé dans le carter (7) un projecteur d'appoint (10) qui est disposé pour émettre des signaux lumineux en position rentrée de non-utilisation (N).

8. Projecteur selon la revendication 1, caractérisé en ce que dans sa paroi arrière, le carter présente une ouverture recouverte par une vitre transparente (12), ouverture derrière laquelle est maintenu un projecteur d'appoint (11) fixe qui est disposé pour émettre des signaux lumineux dans la position rentrée de non-utilisation (N).

9. Projecteur selon la revendication 1, caractérisé en ce qu'à l'axe (8) est relié un moteur rotatif (14) qui est disposé immédiatement derrière le carter (7) et est appuyé du côté de la carrosserie et constitue simultanément un montage tournant simple pour ce carter (7).

10. Projecteur selon la revendication 9, caractérisé en ce qu'un moyen produisant un mouvement rotatif, tel qu'une transmission à pignons ou une transmission à courroie est prévu entre l'axe (8) et le carter (7), pour faire tourner le carter (7) dans ses deux positions finales (G et N).

**Claims**

1. A headlight for vehicles (3), in particular for motor vehicles, the headlight with its optically active parts such as the light source (4), the reflector (5) and where appropriate an internal diffusing screen (6) being held in a casing (7) closed by a cover glass or a diffusing screen (6a) and having a pivot shaft (8) extending essentially in the longitudinal direction of the vehicle and set at an angle to the diffusing screen (6a) or to the cover glass, the headlight in the vehicle body being pivoted around the said pivot shaft (8) into an extended position of use (G) and into a retracted position of non-use (N), characterized in that the pivot shaft (8) is set at an internal acute angle (β) lying in front of or behind the pivot shaft (8) — as viewed in the direction of travel (F) — in positions (N and G respectively) with respect to the cover glass or to the external diffusing screen (6a), and in one end position (position N) the surface of the diffusing screen (6a) extends flush with the adjacent bodywork surface.

2. A headlight according to Claim 1, characterized in that the pivot shaft (8) in a vertical longitudinal plane (X—X) at an angle (α) to an imaginary axis (13) extending at right angles to the diffusing screen (6a), and this angle (α) corresponds to an angle bisector of the angle (α1) between the diffusing screen in the position of use (G) and the position of non-use (N) of the headlight (3).

3. A headlight according to one or more of the preceding Claims, characterized in that the diffusing screen (6a) and an opening (2) in the bodywork are made axially symmetrical to the pivot shaft (8).

4. A headlight according to one or more of the preceding Claims, characterized in that in one end position (position of non-use N) the diffusing screen (6a) of the headlight (3) is visible and extends flush with the bodywork surface and in the other end position turned through 180° (position of use G) the diffusing screen (6a) of the headlight (3) is raised.

5. A headlight according to Claim 4, characterized in that the raised headlight (3) or the casing (7) lies with its lower part (7a) inside the bodywork (space 9) and projects freely with its upper part (7b) over the bodywork contour.

6. A headlight according to Claim 4, characterized in that the reflector (5) with the light source (4) is arranged in the upper part (7b) of the raised casing (7) and the lowest point of the reflector (5) lies approximately in a common horizontal plane (C—C) with the lowest point of the opening (2) in the bodywork.

7. A headlight according to Claim 1, characterized in that an additional headlight (10) arranged so as to emit light signals in the retracted position of non-use (N) is further integrated in the casing (7) next to the main headlight (light source 4, reflector 5).

8. A headlight according to claim 1, characterized in that the casing (7) is provided in its rear wall with an opening covered by a transparent screen (12), a stationary additional headlight (11) arranged so as to emit light signals in the retracted position of non-use (N) being held behind the said opening.

9. A headlight according to Claim 1, characterized in that a rotary motor (14) arranged immediately behind the casing (7) and supported on the bodywork and at the same time having a simple mounting for the said casing (7) is connected to the shaft (8).

10. A headlight according to Claim 9, characterized in that a means producing the rotational movement, such as a gearwheel transmission or a belt drive, is provided between the shaft (8) and the casing (7) in order to rotate the casing (7) into its two end positions (G and N).

FIG.1

FIG.2

FIG.3

**FIG.4**

**FIG.7**

FIG.5

FIG.6

4